Europäisches Patentamt

European Patent Office

Office européen des brevets

(19)

(11) Veröffentlichungsnummer: **0 116 578**
**B1**

(12) ## EUROPÄISCHE PATENTSCHRIFT

(45) Veröffentlichungstag der Patentschrift:
**01.04.87**

(21) Anmeldenummer: **83902548.5**

(22) Anmeldetag: **05.08.83**

(86) Internationale Anmeldenummer:
**PCT/EP 83/00211**

(87) Internationale Veröffentlichungsnummer:
**WO 84/00701 (01.03.84 Gazette 84/6)**

(51) Int. Cl.⁴: $B\ 01\ D\ 29/06$, $B\ 01\ D\ 13/00$

(54) **DRUCKFILTER.**

(30) Priorität: **13.08.82 DE 3230104**

(43) Veröffentlichungstag der Anmeldung:
**29.08.84 Patentblatt 84/35**

(45) Bekanntmachung des Hinweises auf die Patenterteilung:
**01.04.87 Patentblatt 87/14**

(84) Benannte Vertragsstaaten:
**AT BE CH DE FR GB LI LU NL SE**

(56) Entgegenhaltungen:
**DE - B - 1 035 581**
**FR - A - 2 229 438**
**GB - A - 317 440**
**JP - A - 53 042 187**
**JP - A - 53 125 975**
**JP - A - 53 147 681**
**US - A - 1 909 308**
**US - A - 1 918 980**
**US - A - 2 647 637**
**US - A - 4 058 464**

(73) Patentinhaber: **Carl Schleicher & Schüll GmbH & Co. KG,**
**Grimsehlstrasse 23, D-3352 Einbeck (DE)**

(72) Erfinder: **SCHIMMEL, Rainer, Dinkelsbühler Str. 16,**
**D-7100 Heilbronn (DE)**

(74) Vertreter: **Jaeger, Klaus, Dipl.-Chem. Dr., JAEGER &**
**PARTNER Patentanwälte Pippinplatz 4a,**
**D-8035 Gauting (DE)**

## Beschreibung

Die Erfindung betrifft einen Druckfilter gemäss der JP-A 5 342 187 mit Filtertaschen, die in einem als Druckbehälter dienenden Filtergehäuse spiralförmig um ein Kernrohr aufgewickelt sind. Der Innenraum jeder Filtertasche ist dabei mit einem durch ein Röhrchen gebildeten axial verlaufenden Kanal durch mehrere über den Umfang des axialen Kanals verteilte Öffnungen verbunden, wobei jede Filtertasche einen eigenen axialen Kanal besitzt. Diese axialen Kanäle münden in einen Sammelringkanal, der zentrisch durch den Filtergehäusedeckel nach aussen geführt ist. Das Kernrohr mit einem Aussenanschluss am Boden des Filtergehäuses ist über seine gesamte im Filtertaschenwickel liegende Länge mit einer Vielzahl von Öffnungen versehen, durch die die aufzubereitende Flüssigkeit an die Innenseite der Filtertaschenwickel herangeführt wird.

Ähnliche Filtertaschenwickel sind auch aus der JP-A 53 125 975 und der JP-A 53 147 681 bekannt, allerdings ohne das perforierte Zentralrohr.

Angesichts dieses Standes der Technik liegt der Erfindung die Aufgabe zugrunde, die Funktionssicherheit eines Druckfilters der eingangs geschilderten Art so zu verbessern, dass das tangentiale Zu- und Abströmen des Mediums nicht behindert wird, auch bei Anordnung mehrerer in einem einzigen zylindrischen Filtergehäuse axial hintereinandergesteckter, in Serie geschalteter Wickelmodule gewährleistet und die Feststellung einer Störung in einer der Filtertaschen durch separate Permeatüberprüfung möglich ist.

Zur Lösung dieser Aufgabe ist in erster Linie vorgesehen, dass die einzelnen axialen durch separate Röhrchen gebildeten Kanäle für die einzelnen Filtertaschen um den Aussenmantel des Kernrohrs herum angeordnet sind, und zwar eingelegt in Axialnuten, die sich über die gesamte Wickelhöhe im Kernrohr erstrecken. Eine solche Ausgestaltung gewährleistet, dass die am Kernrohr anliegenden separaten Röhrchen ihre vorgegebene Winkelverteilung beibehalten, wodurch wiederum gewährleistet ist, dass sie die Durchtrittsöffnungen, die den Innenraum des Kernrohres mit dem Druckraum des Filtergehäuses bzw. mit dem Wickelzwischenraum verbinden, nicht abdecken.

Ausserdem ermöglicht diese genau eingehaltene Winkelverteilung der Röhrchen die erwähnte separate Permeatüberprüfung. Diese kann in der Art bewirkt werden, dass den axialen Öffnungen der axialen Kanäle in den Röhrchen, die mit den Filtertaschen verbunden sind, koaxial gegenüberliegend Probenahmeventile angeordnet sind, die ein hohles axial verschiebbares und druckdicht durch den Deckel des Filtergehäuses hindurchgeführtes Verschlussteil aufweisen, das dicht verschliessend auf den Ausgang des jeweils gegenüberliegenden axialen Kanals aufdrückbar ist. Durch die Bohrung des so den Ausgang des axialen Kanals verschliessenden Probenahmeventils strömt dann nur noch das aus diesem einzigen axialen Kanal abfliessende Permeat oder Filtrat zur Probenahme aus dem Filter heraus. Ist ein solches Probenahmeventil für jeden einzelnen der axialen Kanäle oder Röhrchen vorgesehen, so kann jede einzelne Filtertasche, also jedes einzelne Filterelement oder Membranelement des Filter- oder Membranwickels auf seine Funktionstauglichkeit überprüft werden, ohne dass der Betrieb des gesamten Moduls eingestellt zu werden braucht oder in sonst einer ernstlichen Weise beeinträchtigt wird.

Dies eröffnet auch die Möglichkeit im Fall von Beschädigungen einzelner Filtertaschen, diese Filtertaschen entweder aus dem Filtrationsgeschehen auszuschalten und so einen einwandfreien Notbetrieb oder Restbetrieb des Druckfilters aufrechtzuerhalten, oder statt des gesamten Wickels nur seine billigeren Einzelteile auszutauschen.

Durch die zentrale Führung sowohl der Filtertaschenströmung als auch des den Wickel ausserhalb der Taschen rein tangential durchströmenden Mediums können die solcherart aufgebauten Wickel auch zu mehreren axial hintereinandergesteckt in einem einzigen zylindrischen Filtergehäuse mit nur zwei stirnseitigen Abschlusskappen untergebracht werden. Dies spart erhebliche Anlagenkosten ein. Dabei können die in einem einzigen Filtergehäuse untergebrachten mehrstufigen Wickel sowohl in Serie als auch parallel zueinander geschaltet sein, wobei diese Begriffe sich auf die Strömungsführung vom Zulauf des zu behandelnden Mediums zum Ablauf des Konzentrats beziehen. Bei Serienschaltung der Wickelmoduln werden zwischen zwei axial aufeinanderfolgenden Moduln radiale Trennplatten oder Abdeckkappen eingefügt, die sowohl gegenüber dem Kernrohr als auch gegenüber der Innenwand des Filtergehäuses hermetisch abdichten.

In Weiterbildung der Erfindung ist schliesslich zur Erleichterung der Abdichtung der vorgenannten Trennplatten oder Abdeckkappen sowie der Reinigung und aus Gründen eines effektiveren Korrosionsschutzes die Innenwand des Filtergehäuses mit einer austauschbaren, insbesondere schlauchartigen Kunststoff-Folie, vor allem Polyethylen-Folie oder Polytetrafluorethylen-Folie, ausgekleidet. Diese Auskleidung kann durch die hermetisch dichtenden in der Radialebene liegenden Zwischenplatten oder Abdeckkappen im Filtergehäuse fixiert werden.

Die Erfindung ist im folgenden anhand eines Ausführungsbeispiels in Verbindung mit den Zeichnungen näher erläutert. Es zeigen:

Fig. 1 im Axialschnitt und in Teildarstellung ein Ausführungsbeispiel des Druckfilters;

Fig. 2 im Axialschnitt ein weiteres Ausführungsbeispiel des Druckfilters ohne Filtergehäuse;

Fig. 3 in perspektivischer Teildarstellung ein Axialröhrchen mit Filtertasche;

Fig. 4 in Seitensicht ein weiteres Ausführungsbeispiel eines Anschlussstücks oder Kupplungsstücks für das Kernrohr des Wickelmoduls;

Fig. 5 einen Schnitt nach V–V in Fig. 2; und

Fig. 6 in vergrösserter Teildarstellung die Einzelheit VI in Fig. 6.

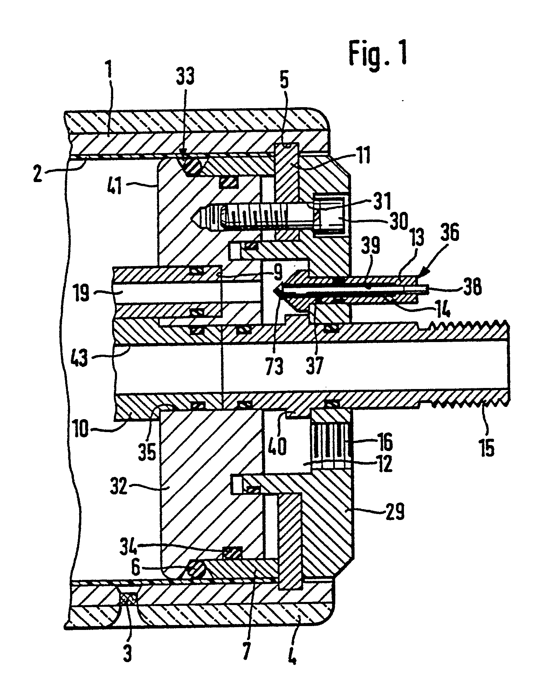

Ein erstes Ausführungsbeispiel der Erfindung ist in Teildarstellung und im Axialschnitt in der Fig. 1 gezeigt, wobei sich die Teildarstellung insbesondere auf den stirnseitigen Verschluss eines zylindrischen Filtergehäuses 1 und die Halterung des im einzelnen nicht dargestellten Wickelmoduls bezieht.

Das Filtergehäuse 1 ist ein Stahlrohr oder Edelstahlrohr, das einem Betriebsdruck von bis zu 100 bis 200 bar standhält, und das durch einen Deckel 29 verschlossen ist. Der Deckel 29 besteht ebenfalls aus Edelstahl.

Zum Zwecke des Korrosionsschutzes ist das Filtergehäuse 1 auf seiner Innenwand mit einer austauschbaren Polyethylenfolie 2 ausgekleidet. In der Wand des Filtergehäuses 1 ist eine Bohrung vorgesehen, die mit einem porösen Sintermetallpfropfen 3 verschlossen ist. Wenn die Polyethylenfolie 2 undicht ist, tritt die im Filtergehäuse 1 unter Druck stehende Flüssigkeit in den Zwischenraum zwischen der Aussenseite der Folie 2 und der Innenwand des Filtergehäuses 1 ein und durch den porösen und keramischen Sintermetallstopfen 3 aus dem Filtergehäuse aus. Das Austreten von Flüssigkeit an dieser Prüfbohrung ist also ein Anzeichen dafür, dass während des Betriebs des Druckfilters die Kunststoff-Folie 2 undicht geworden ist. Andererseits, solange der Prüfstopfen 3 trockenbleibt, ist auch gewährleistet, dass die das Filtergehäuse 1 innen auskleidende Kunststoff-Folie 2 dicht ist.

Wenn dies für die Betriebsbedingungen erforderlich ist, kann das Filtergehäuse 1 auch in der in Fig. 1 gezeigten Weise aussen mit einer Wärmeisolierungsschicht 4 ummantelt sein. Der Aufbau solcher Wärmeisolierungsschichten ist an sich bekannt und braucht daher an dieser Stelle nicht weiter beschrieben werden.

Die Abschlussplatte bzw. der Deckel 29 liegt auf einem Auflagering 11 auf, der als Spreizring, Sprengring oder Segmentring ausgebildet ist und seinerseits in einer Ringnut 5 gelagert ist, die im Randbereich der Innenwand des Filtergehäuses 1 ausgebildet ist. In der Abdeckplatte 20 sind mit gleichem Winkelabstand voneinander mehrere axiale Bohrungen 30 vorgesehen, durch die hindurch mit Schrauben 31, insbesondere Schrauben mit Zylinderkopf und Innensechskant, eine in der Radialebene liegende Zwischenplatte 32 gegen die äussere Abdeckplatte (Deckel 29) axial spannbar ist. Dabei erfolgt die Abstützung der Zwischenplatte 32 nicht direkt an der Abdeckplatte 29, sondern über einen zylindrischen Zwischenring 7. Zwischen der axial inneren Stirnseite des Zwischenringes 7 und der dieser gegenüberliegenden und nach axial auswärts weisenden Ringfläche der Zwischenplatte 32 ist eine Nut 33 ausgebildet, in der ein Dichtungsring 6 liegt. Dieser Dichtungsring 6 ist die Hauptdichtung, mit der der im Inneren des Filtergehäuses liegende Druckraum gegen die Umgebung abgedichtet ist. Zusätzlich ist der zylindrische Zwischenring 7 gegen die Zwischenplatte 32 durch einen kleineren Dichtungsring 34 abgedichtet.

Bei angezogenen Schrauben 31 ist also der Stützring 11 zwischen der Innenseite des Deckels 29 und der axial aussenliegenden Stirnseite des zylindrischen Zwischenringes 7 eingespannt. Gleichzeitig wird der O-Ring 6 zwischen der Zwischenplatte 32 und dem zylindrischen Zwischenring 7 dichtend verformt.

In der Zwischenplatte 32, die aus Stahl oder glasfaserverstärktem Kunststoff oder einem anderen festen und chemisch inerten Werkstoff bestehen kann, sind weiterhin Ausnehmungen 9 ausgebildet, die der Aufnahme der stirnseitigen Enden der weiter unten näher erläuterten axialen Kanäle bzw. Röhrchen 19 dienen. Desgleichen ist in der Zwischenplatte 32 eine Bohrung 35 vorgesehen, die der Aufnahme des stirnseitigen Randes eines Wickelkernrohres 10 dient.

Zwischen der Zwischenplatte 32 und dem Abschlussdeckel 29 ist ein Sammelringkanal 12 ausgebildet, in den sämtliche axialen Kanäle 19 einmünden. Dieser Sammelringkanal 12 ist über eine mit einem Innengewinde versehene Anschlussbohrung 16 mit einem Aussenanschluss verbindbar.

Der Öffnung jedes axialen Kanals 19 in den Sammelringkanal 12 gegenüber ist ein Probenahmeventil 36 angeordnet, das ein Ventilverschlussteil 13 aufweist, das in einer Bohrung 37 im Deckel 29 axial verschiebbar und hermetisch abgedichtet gelagert ist. Gegenüber der in der Fig. 1 gezeigten Stellung ist das Ventilverschlussteil 13 nach axial einwärts, in der Fig. 1 also nach links, in der Weise verschiebbar, dass die Mündung des axialen Kanals 19 in den Sammelringkanal 12 verschlossen wird. Die Mündung jedes axialen Kanals 19 dient also dem Verschlussteil 13 als Ventilsitz.

In jedem Verschlussteil 13 ist ein Zentralkanal 39 ausgebildet, der über einen Radialkanal 14 zur Umgebung geöffnet ist. Die axial innenliegende Öffnung des Zentralkanals 39 des Verschlussteils 13 ist durch ein Ventilverschlussteil 73 verschlossen, das mit einer Kolbenstange 38, die von aussen betätigt werden kann, vorzugsweise gegen Federspannung, niedergedrückt und geöffnet werden kann. Wird die Kolbenstange 38 in der in Fig. 1 gezeigten Stellung des Verschlussteils 13 niedergedrückt, so tritt zum Zwecke der Probenahme aus dem Radialkanal 14 Probeflüssigkeit aus, die dem Sammelringkanal 12 entstammt, also ein Gemisch der aus allen axialen Kanälen 19 austretenden Flüssigkeiten ist. Wird dagegen die Kolbenstange 38 bei eingeschobenem Verschlussteil 13 niedergedrückt, so tritt aus dem Kanal 14 ausschliesslich Flüssigkeit aus, die einem einzigen, nämlich dem jeweils zugeordneten und gegenüberliegenden axialen Kanal 19 entstammt. Solchen Probenahmen, die also wahlweise aus dem Kanal 19 oder aus dem Sammelringkanal 12 entnommen werden können, dienen der Betriebsüberprüfung und des Druckfilters, ohne dass dessen Betrieb eingestellt oder auch nur kurzfristig unterbrochen zu werden braucht. Ausserdem ist eine Partialüberprüfung jedes einzelnen axialen Kanals 19 möglich.

Über ein beispielsweise mit einem Aussengewinde versehenes hülsenartiges Anschlussstück 15, das mit einem Flansch 40 an der Innenseite des Deckels 29 abgestützt ist, und dessen axial inneres Ende ebenfalls in die Bohrung 35 der Zwischenplatte 32 eingreift, kann ein Aussenanschluss zum Innenraum des Kernrohres 10 hergestellt werden.

In der Fig. 1 nicht dargestellt ist der Filtertaschenwickel, der die axialen Kanäle oder Röhrchen 19 einschliessend auf dem Kernrohr 10 aufgewickelt ist und sich mit einigem Abstand von der Innenfläche 41 der Zwischenplatte 32 in der Darstellung der Fig. 1 nach links anschliesst.

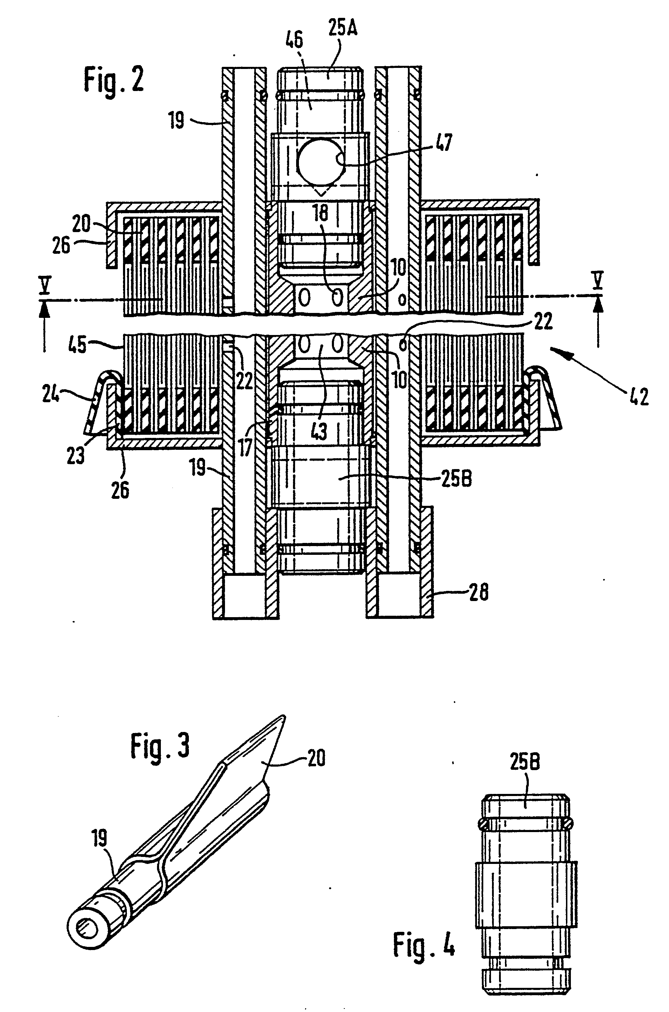

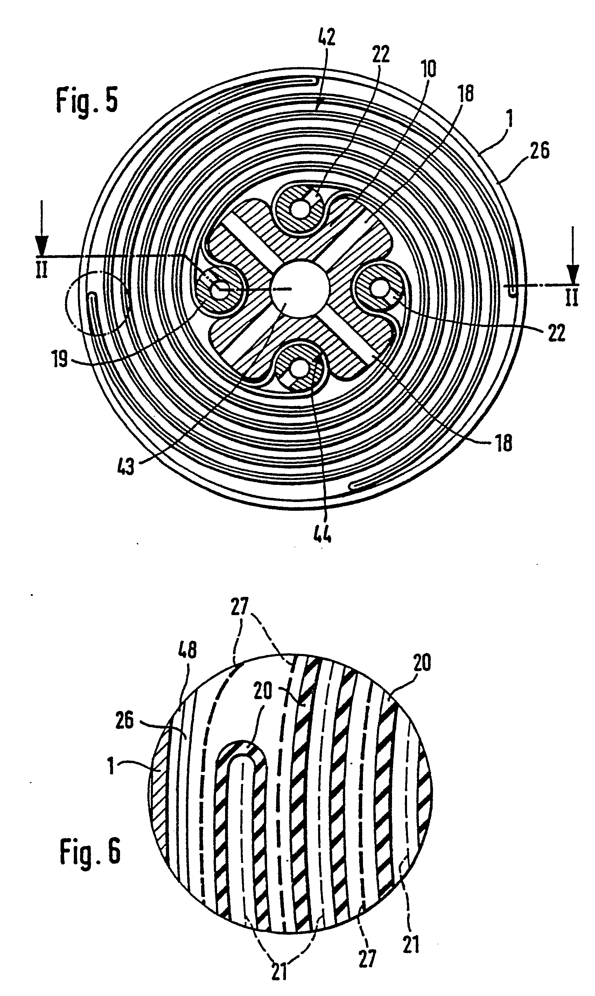

Der Filtertaschenwickel 42 ist in den Figuren 2 und 5 dargestellt, und zwar in Fig. 2 im Axialschnitt und in Fig. 5 im Radialschnitt. Während der einfacheren Darstellung halber in der Fig. 2 das Filtergehäuse 1 nicht gezeigt ist, ist das Filtergehäuse 1 im Radialschnitt der Fig. 5 dargestellt.

In der am besten aus Fig. 5 erkennbaren Weise ist das Kernrohr 10 mit einer axialen Bohrung 43, dem eigentlichen Innenraum des Kernrohres 10, versehen, von dem mit gleichem Winkelabstand voneinander bei dem hier gezeigten Ausführungsbeispiel in der Schnittebene 4 Radialkanäle oder -öffnungen 18 ausgehen, die sich in den inneren Druckraum im Filtergehäuse 1 frei öffnen. Es besteht also eine durchgehende Verbindung vom Innenraum des Filtergehäuses 1 über die Öffnungen 18 durch die Innenbohrung 43 des Kernrohres 10 zum Aussenanschluss 15 (Fig. 1). Die Öffnungen 18 öffnen sich radial innerhalb der ersten Lagen oder Windungen der Filtertaschen des Wickels 42.

Das Kernrohr 10 ist in dem hier gezeigten Ausführungsbeispiel mit vier axial verlaufenden Nuten 44 versehen, die jeweils zwischen den vier Öffnungen 18 liegen und in denen die axialen Kanäle, die hier als separate Röhrchen 19 ausgebildet sind, eingelegt verlaufen, die über Öffnungen 22 gegen den inneren Druckraum im Filtergehäuse 1 hermetisch abgedichtet mit dem Innenraum der Filtertaschen 20 (Fig. 6) verbunden sind. Dabei ist jedes einzelne Röhrchen 19 in der in Fig. 3 in perspektivischer Teildarstellung schematisch gezeigten Art mit einer einzeln zugeordneten Filtertasche 20 verbunden. Die vier separaten Filtertaschen werden dann in der aus Fig. 5 erkennbaren Weise zum Wickel 42 aufgewickelt.

Sowohl die Öffnungen 18 im Kernrohr 10 als auch die Öffnungen 22 in den Röhrchen 19 sind gleichmässig über die gesamte Wickelhöhe verteilt, und zwar in einer Dichte von ungefähr 1 bis 3 Öffnungen pro Zentimeter. Diese Dichte kann jedoch je nach Einsatzbestimmungen des Druckfilters auch abweichend in einer vom Fachmann ohne weiteres zu ermittelten Art und Weise bemessen sein.

In dem hier gezeigten Ausführungsbeispiel bestehen die Filtertaschen 20 aus Polymermembranen, in denen flächige Abstandshalter 21, die insbesondere gewebeartig oder schwammartig ausgebildet sind, eingelegt sind. Zwischen den einzelnen Taschen 20 ist in an sich bekannter Weise ein Trenngeflecht oder Trenngewebe 27, das möglichst grobmaschig mit Maschenweiten im Bereich von 0,1 bis 10 mm ausgebildet ist, eingelegt und im Wickel mit aufgewickelt. Dieses Trenngeflecht sorgt dafür, dass die zum Wickel aufgewickelten Filtertaschen 20 aussen einwandfrei umspült werden können.

Die obere und die untere Stirnseite des Filtertaschenwickels 42 sind unter Zwischenlage eines Dichtbandes oder Dichtprofils 24 hermetisch abgedichtet mit Abdeckkappen 26 verschlossen. Zudem sind die einzelnen Windungen der einzelnen Filtertaschen 20 in den Kappenbereichen mittels insbesondere elastischer Dichtbänder 23 sorgfältig gegeneinander abgedichtet. Die zumindest im wesentlichen zylindrischen Aussenfläche 45 des Wickels 42 liegt dabei zwischen den stirnseitigen Abdeckkappen 26 frei. In der am besten aus der vergrösserten Teildarstellung der Fig. 6 ersichtlichen Weise erfolgt in diesem Mantelbereich 45 des Wickels 42 der tangentiale Eintritt bzw. Austritt der den gesamten Wickel tangential spiralig durchströmenden Flüssigkeit, die dann über die Öffnungen 18 in die zentrale Bohrung der Kernrohrs 10 eintritt bzw., bei umgekehrter Strömungsrichtung auf diesem Wege austritt. Da auch der Eintritt bzw. Austritt an den Öffnungen 18 in den Wickel hinein bzw. aus diesem hinaus auf die gesamte Wickelhöhe gleichmässig axial verteilt rein tangential erfolgt, wird der Wickel 42 also insgesamt von seiner Aussenfläche 45 bis zu seinen innersten Windungen, also bis zu den Öffnungen 18, rein tangential und die Flächen der Filtertaschen 20 optimal ausnutzend durchströmt.

In der Darstellung der Fig. 2 ist auf das Kernrohr 10 aufgesteckt ein Anschluss- oder Verbindungsstück 25A dargestellt, das eine zentrale axiale Blindbohrung 46 aufweist, die sich über eine kommunizierende radiale Bohrung 47 oberhalb der Abdeckkappe 26 und unterhalb der in der Fig. 2 nicht dargestellten Zwischenplatte 32 frei in den Druckraum des Filtergehäuses 1 öffnet. Durch einen Ringspalt 48 (Fig. 6) hindurch gelangt das flüssige Medium aus den Bohrungen 46 und 47 aussen um die Abdeckkappe 26 herum an die Seitenwände 45 des Wickels 42. Die Bohrungen 46 und 47 haben keinerlei Verbindung zur zentralen Bohrung 43 des Kernrohres 10. Die Bohrung 43 des Kernrohres 10 ist über ein Anschlussstück 25B (Fig. 2 und 4), das eine durchgehende innere Bohrung aufweist, nach aussen zugänglich.

Beim Hintereinanderstecken mehrerer Wickelmoduln in einem einzigen Filtergehäuse 1 können Verbindungsstücke oder Verbindungshülsen 28 der in der Fig. 2 gezeigten Art und wahlweise Kupplungsstücke 25A oder 25B eingesetzt werden, je nach dem, ob die Folge der Wickel in Serie oder parallel zueinander betrieben werden sollen.

Wenn die Filtertaschen 20 beispielsweise aus einem für die Durchführung einer umgekehrten Osmose geeigneten Polymermembran bestehen und der in dem hier erläuterten Ausführungsbeispiel gezeigte Druckfilter als Modul für die umgekehrte Osmose eingesetzt werden soll, erfolgt der Betrieb der Vorrichtung vorzugsweise wie folgt: Die osmotisch zu konzentrierende Druckflüssigkeit wird über ein in den Figuren nicht im einzelnen dargestelltes Anschlussstück, das dem in der Fig. 1 gezeigten Anschlussstück 15 entspricht, durch die Bohrungen 46 und 47 in den Innenraum des Filtergehäuses 1 eingedrückt, umspült die Abdeckkappen 26 und läuft tangential in den Filtertaschenwickel ein. Das zu behandelnde Medium durchströmt den Wickel tangential von radial aussen nach radial innen und tritt durch die Öffnungen 18 als Konzentrat in die zentrale Bohrung 43 des Kernrohres 10 ein und zentral und axial über das Anschlussstück 25B (Fig. 2) oder in der in Fig. 1 gezeigten Weise direkt über das Aussenanschlussstück 15 als Konzentrat wieder aus. Das in den Innenraum der Filtertaschen 20 eingetretene Permeat läuft aus dem Innenraum der Filtertaschen 20 über die Öffnungen 22 in die axialen Röhrchen 19 (Fig. 5), von wo aus es über den Sammelringkanal 12 (Fig. 1) am Anschluss 16 verfügbar ist.

## Patentansprüche

1. Druckfilter mit einem Filtergehäuse (1), das als Druckbehälter dient und einem aus mehreren Filtertaschen (20) bestehenden Filtertaschenwickel (42), der ein mit radialen Kanälen oder Öffnungen (18) versehenes Kernrohr (10) spiralig umgibt, wobei der Innenraum jeder Filtertasche (20) mit einem parallel zum Kernrohr verlaufenden, durch ein Röhrchen (19) gebildeten Kanal mit einem Sammelringkanal (12) verbunden ist, der einen gemeinsamen Aussenanschluss (16) aufweist, dadurch gekennzeichnet, dass die Röhrchen (19) in im Kernrohrmantel ausgebildeten Axialnuten (44) in einer solchen Winkelverteilung untergebracht sind, dass die radialen Öffnungen (18) des Kernrohrs (10) frei bleiben.

2. Druckfilter nach Anspruch 1, gekennzeichnet durch mindestens ein axial ausgerichtetes und zu zumindest einem der sich in den Sammelkanal (12) öffnenden Röhrchen (19) koaxiales, den stirnseitigen Deckel (29) des Filtergehäuses durchsetzendes und hermetisch gegen die Ventilöffnung im Deckel abgedichtetes und insbesondere gegen Federspannung axial verschiebbares Probenahmeventil (36), dessen axial verschiebbares Verschlussteil (13) eine durchgehende Innenbohrung aufweist, die durch ein ebenfalls insbesondere gegen Federspannung von aussen durch Verschieben unabhängig vom Verschlussteil (13) stellbares Sekundärverschlussteil verschlossen ist und die durch einen offenen Radialkanal oder Schrägkanal (14) zur Probenahme zugänglich ist, wobei die Öffnung des axialen Röhrchens (19) in den Sammelringkanal (12) als Ventilsitz für das Verschlussteil (13) ausgebildet ist.

3. Druckfilter nach Anspruch 1, dadurch gekennzeichnet, dass das Kernrohr (10) und die Röhrchen (19) in einer in der Radialebene liegenden Platte (32) druckflüssigkeitsdicht gehaltert sind, die an ihrem Umfang druckflüssigkeitsdicht an der Innenwand des Filtergehäuses anliegt.

4. Druckfilter nach Anspruch 1, dadurch gekennzeichnet, dass die Innenwand des Filtergehäuses (1) mit einer schlauchförmigen, dichten und austauschbaren Kunststoff-Folie (2), insbesondere PE-Folie oder PTFE-Folie, ausgekleidet ist.

5. Druckfilter nach Anspruch 1, gekennzeichnet dadurch, dass das Kernrohr (10) und die Röhrchen (19) druckflüssigkeitsdicht umschliessende Abdeckkappen (26), die zwischen sich jeweils einen Filtertaschenwickel (42) aufnehmen und seine Stirnseiten verschliessen.

6. Druckfilter nach Anspruch 5, gekennzeichnet durch ein Dichtband oder Dichtprofil (24) zur druckflüssigkeitsdichten Abdichtung des äusseren Randes der Abdeckkappe (26) gegenüber der Innenwand des Filtergehäuses (1).

7. Druckfilter nach Anspruch 1, gekennzeichnet durch ein in ein Ende eines Kernrohres (10) einsetzbares Anschluss- oder Verbindungsstück (25A), das eine zentrale Blindbohrung (46) und eine mit ihr kommunizierende radiale Bohrung (47) aufweist, und die Bohrung eines Anschlussstücks oder eines Kernrohres mit dem Druckraum des Filtergehäuses verbindet.

8. Druckfilter nach Anspruch 7, dadurch gekennzeichnet, dass bei Anordnung mehrerer Wickelmodule in einem einzigen rohrförmigen Filtergehäuse in axialer Aufeinanderfolge und, bezogen auf den Mediumdurchfluss vom Druckzulauf zum Konzentratablauf, in Serienschaltung mehrere Kernrohre (10) durch jeweils ein mit einer Blindbohrung (46) und eine radiale Bohrung (47) versehenes Verbindungsstück (25A) verbunden sind und durch druckflüssigkeitsdicht an der Innenwand des Filtergehäuses anliegende Platten oder Abdeckkappen für jeden Wickelmodul ein separater Filtergehäusedruckraum geschaffen wird.

## Revendications

1. Filtre presseur comprenant une enveloppe de filtre (1) qui sert de récipient à pression et un enroulement (42) de poches de filtre qui est constitué par plusieurs poches (20) de filtre et qui entoure en spirale un tube central (10) muni de conduits ou d'ouvertures (18) orientés dans le sens radial, l'espace intérieur de chaque poche (20) de filtre étant constitué par un petit tube (19) orienté parallèlement au tube relié à un conduit central et associé à un conduit annulaire collecteur (12) qui comporte un raccord extérieur commun (16), caractérisé en ce que les petits tubes (19) sont logés dans des rainures axiales (44) ménagées dans l'enveloppe du tube central suivant des directions angulaires réciproques telles que les ouvertures radiales (18) du tube central (10) restent libres.

2. Filtre presseur selon la revendication 1, caractérisé en ce qu'il comprend au moins une soupape d'échantillonnage (36) qui est orientée dans le sens axial et coaxiale à l'un au moins des petits tubes (19) qui débouchent dans le conduit collecteur (12), traverse le couvercle (23) situé du côté frontal de l'enveloppe de filtre, est hermétiquement isolée de l'ouverture de soupape ménagée dans le couvercle et peut se déplacer dans le sens axial en s'opposant à l'action d'un ressort, et dont l'organe de fermeture (13), qui peut se déplacer dans le sens axial, comporte un alésage intérieur de passage qui est fermé par un organe de fermeture secondaire, qui peut également être déplacé de l'extérieur, notamment en s'opposant à l'action d'un ressort, indépendamment de l'organe de fermeture (13), et qui est accessible, pour l'échantillonnage, par un conduit radial ou un conduit oblique (14), l'ouverture par laquelle le petit tube axial (19) débouche dans le conduit annulaire collecteur (12) constituant un siège de soupape pour l'organe de fermeture (13).

3. Filtre presseur selon la revendication 1, caractérisé en ce que le tube central (10) et les petits tubes (19) sont maintenus, de manière à assurer l'étanchéité au liquide, dans une plaque (32) qui est située dans le plan radial et qui, à sa périphérie, s'applique de manière à assurer l'étanchéité au fluide contre la paroi intérieure de l'enveloppe du filtre.

4. Filtre presseur selon la revendication 1, caractérisé en ce que la paroi intérieure de l'enveloppe (1) du filtre est recouverte d'une feuille (2) en forme d'enveloppe souple étanche et interchangeable, notamment d'une feuille de PE ou de PTFE.

5. Filtre presseur selon la revendication 1, caractérisé en ce que le tube central (10) et les petits tubes (19) sont munis de capuchons de couverture (26) qui les entourent de manière à assurer l'étanchéité au liquide, ils enferment entre eux un enroulement de filtre (42), et ils ferment ses côtés frontaux.

6. Filtre presseur selon la revendication 5, caractérisé en ce qu'il comprend une bande ou un profil (24) d'étanchéité assurant la séparation étanche au liquide du bord extérieur du capuchon de couverture (26) par rapport à la paroi intérieure de l'enveloppe (1) du filtre.

7. Filtre presseur selon la revendication 1, caractérisé en ce qu'il comprend une pièce de raccordement ou de liaison (25A) qui peut s'engager dans une extrémité d'un tube central (10), qui comporte un alésage borgne central (46) et un alésage radial (47) communiquant avec le précédent et relie l'alésage d'une pièce de raccordement ou d'un tube central à la cavité à pression de l'enveloppe du filtre.

8. Filtre presseur selon la revendication 7, caractérisé en ce que, par suite de la mise en place de plusieurs modules d'enroulement les uns à la suite des autres dans le sens axial dans une seule enveloppe de filtre tubulaire et de l'assemblage, dans le sens du passage du milieu depuis l'arrivée sous pression jusqu'à la sortie du concentrat, de plusieurs tubes centraux (10), montés en série, par des pièces de liaison (25A) munies chacune d'un alésage borgne (46) et d'un alésage radial (47), et par suite de la présence de plaques ou de capuchons de fermeture appliqués de manière à assurer l'étanchéité au liquide contre la paroi intérieure de l'enveloppe de filtre, on réalise pour chaque module d'enroulement, dans l'enveloppe du filtre, une cavité à pression séparée.

**Claims**

1. Pressure filter having a filter ousing (1) serving as a pressure chamber and a filter coil (42) consisting of several filter pockets (20) surrounding spirally a central tubing (10) provided with radial channels or openings (18), the interior of each filter pocket (20) being connected to an annular collecting channel (12) having one external connection (16) through a respective channel parallel to the central tubing, said channel being a small tube (19), characterized in that the small tubes (19) being arranged in axial grooves formed in the jacket of the central tubing in such angular distribution as to keep the radial openings (18) of the central tubing (10) uncovered.

2. Pressure filter according to claim 1, characterized by one axially arranged valve for the extraction of samples (36) being coaxial to at least one of the tubes (19) opening into the collecting channel (12), said valve (36) leading through the front end of the cap of the filter housing and being hermetically sealed with respect to the valve opening in the cap and particularly being axially movable against the tension of a spring, the axially movable closing element (13) of said valve (36) having an inner straight bore being closed by means of a secondary closing element, said secondary closing element being adjustable by displacement from outside against the tension of a spring independent from the closing element of said valve (36) as well, the inner straight bore being accessible for extraction of samples through an open radical channel or inclined channel (14), with the opening of the axial tube (19) into the annular collecting channel (12) being formed as valve seat for the closing element (13).

3. Pressure filter according to claim 1, characterized in that the central tubing (10) and the tubes (19) are held tightly with respect to the liquid under pressure in a plate (32) lying in the radial plane, the rim of said plate adjoining tightly with respect to the liquid under pressure the inner wall of the filter housing.

4. Pressure filter according to claim 1, characterized in that the inner wall of the filter housing (1) is provided with a tight and replaceable film of a resin in the form of a hose, the film being particularly made of polyethylene or polytetrafloroethylene.

5. Pressure filter according to claim 1, characterized by caps (26) closing the central tubing (10) and the tubes (19) tightly with respect to the liquid under pressure, the caps receiving one respective filter coil (42) between them and closing its front end.

6. Pressure filter according to claim 5, characterized by a sealing band or sealing profile (24) for sealing tightly with respect to the liquid under pressure the outer rim of the cap (26) toward the interior wall of the filter housing (1).

7. Pressure filter according to claim 1, characterized by a joining or connecting element (25A) suitable for being inserted into one end of one central tubing (10), the joining or connecting element having a central blind hole (46) and one radial bore (47) communicating with it and connecting the bore of a connecting piece or a central tubing with the pressure chamber of the filter housing.

8. Pressure filter according to claim 7, characterized in that in the arrangement of several filter coils in one tubular filter housing in axial sequence and in series connection with respect to the flow of the medium from feed to drain, several central tubings (10) are connected through one respective connecting element (25A) provided with a blind hole (46) and a radial bore (47) and that a separate pressure filter chamber is provided for each filter coil by means of plates or caps adjoining tightly with respect to the liquid under pressure the inner wall of the filter housing.

# Fig. 1

**Fig. 2**

**Fig. 3**

**Fig. 4**

0 116 578

Fig. 5

Fig. 6

13